# EUROPÄISCHE PATENTSCHRIFT

(11) **EP 0 724 055 B1**
(45) Veröffentlichungstag und Bekanntmachung des Hinweises auf die Patenterteilung: **15.03.2000**
(21) Anmeldenummer: 96810005.7
(22) Anmeldetag: 05.01.1996
(51) Int. Cl.: E05B 15/16, B60R 25/08, B60R 25/00

(54) **Aufbruchsichere Befestigung für eine Kontrolleinrichtung mit einem Schliesszylinder**
Security mounting against breakage for a control device with a cylindrical lock
Fixation de sécurité contre l'effraction pour un dispositif de contrôle avec une serrure cylindrique

(30) Priorität: 24.01.1995 CH 18295
(43) Veröffentlichungstag der Anmeldung: 31.07.1996
(73) Patentinhaber: Berchtold AG, SEA Schliess-Systeme, 3052 Zollikofen (CH)
(72) Erfinder: Vonlanthen, Benno, CH-3052 Zollikofen (DE)
(74) Vertreter: Bruderer, Werner

(56) Entgegenhaltungen:
- EP-A- 0 505 767
- CH-A- 671 262
- DE-U- 8 906 933
- DE-U- 9 014 414
- US-A- 3 625 573
- US-A- 4 836 001

## Beschreibung

Die Erfindung betrifft eine Kontrolleinrichtung mit aufbruchsicherer Befestigung, einem Schliesszylinder und einem Schlüssel, wobei die Kontrolleinrichtung an einer Innenseite einer Trennwand angeordnet und der Schliesszylinder in das Gehäuse der Kontrolleinrichtung eingebaut ist, ein Teilbereich des Schliesszylinders in einen Durchbruch in der Trennwand eingreift, und der Schlüsselkanal gegen die Aussenseite, beziehungsweise die Bedienungsseite gerichtet, und der gegen die Bedienungsseite gerichtete Teil des Schliesszylinders mindestens teilweise von Schutzelementen geschützt ist.

Kontrolleinrichtungen für hydraulische, pneumatische oder elektrische Systeme sind oft mit Sperreinrichtungen in der Form von Zylinderschlössern ausgestattet, welche ein Sperren der Systeme gegen unbefugte Benutzung ermöglichen. Es ist beispielsweise bekannt, an Werkzeugmaschinen den elektrischen Hauptschalter mit einem Zylinderschloss zu koppeln, welches durch einen entsprechend codierten Schlüssel betätigt werden kann. Damit kann der Schalter nur von Personen betätigt werden, welche im Besitze eines passenden Schlüssels sind. Eine weitere Anwendung ist bei Nutzfahrzeugen, z.B. gemäss US-A-3,625,573 oder EP-B1-0 239 987 bekannt, um diese gegen Diebstahl zu sichern. Dabei wird in eines der hydraulischen Systeme, normalerweise das Hydrauliksystem, welches die Bremsen oder die Lenkung betätigt, ein zusätzliches Kontrollventil eingebaut, wobei dieses Kontrollventil über ein Zylinderschloss betätigt wird. Dieses Kontrollventil ermöglicht, den Fluss von Hydrauliköl im Steuersystem, z.B. dem Bremssystem, zu unterbrechen oder so umzuleiten, dass die Bremsen nicht betätigt werden können. Zusätzlich kann über dieses Kontrollventil auch noch die elektrische Zuleitung zum Startschalter geführt werden, sodass auch diese durch Betätigen des Kontrollventiles unterbrochen werden kann. Das Kontrollventil bildet damit eine Kontrolleinrichtung, mittels welcher wesentliche Elemente eines Nutzfahrzeuges unterbrochen oder blockiert werden können, sodass ein unbefugtes Wegfahren, bzw. ein Diebstahl eines derartigen Nutzfahrzeuges nicht mehr möglich ist. In der praktischen Anwendung zeigt sich nun aber, dass Kontrolleinrichtungen, welche mit bekannten Zylinderschlössern ausgestattet sind, in gleicher Weise geknackt, bzw. aufgebrochen werden, wie beispielsweise Türschlösser. Dies kann dadurch erfolgen, dass bei vorstehenden Schliesszylindern mit einem entsprechenden Werkzeug der Zylinder um seine Achse gedreht und die Verankerungen zwangsweise abgewürgt werden. In der Folge kann dann die Kontrolleinrichtung betätigt werden. Eine andere Möglichkeit besteht darin, dass mit entsprechenden Hilfswerkzeugen der drehbare Rotor aus dem Stator des Schliesszylinders herausgezogen wird, wobei auch hier die Sperrelemente zerstört werden. Auch hier kann normalerweise anschliessend die Kontrolleinrichtung betätigt und damit die Sperre aufgehoben werden. Bei ungeschützten Schliesszylindern ist es aber auch möglich, den Rotor aus dem Schliesszylinder herauszubohren und damit die Sperre aufzuheben. Um das Abdrehen des gesamten Schliesszylinders zu verhindern, ist es bekannt, die vorstehenden Teile des Schliesszylinders mit Schutzelementen in der Form einer Panzerplatte abzudecken und gegen einen Angriff mit Werkzeugen zu schützen. Derartige Schutzbeschläge bilden jedoch keine Sicherheit gegen das Ausziehen des Rotors, bzw. des ganzen Schliesszylinders und auch keine Sicherheit gegen das Aufbohren. Bei Schliesszylindern, welche in Türen eingebaut werden, ist es beispielsweise aus DE-A1-39 05 326 bekannt, vor dem Schliesszylinder eine Platte anzuordnen, welche mit Schultern den Schutzbeschlag hintergreift und dadurch ein Herausziehen des Schliesszylinders und teilweise auch des Rotors verhindert.

Die bekannten Lösungen zum Schutz vor Ausziehen und Aufbohren oder Abwürgen des Schliesszylinders lassen sich bei Kontrolleinrichtungen der oben erwähnten Art, welche mit Schliesszylindern verbunden sind, nur mit Schwierigkeiten einsetzen. Dies ist dadurch bedingt, dass der Schliesszylinder in das Gehäuse der Kontrolleinrichtung eingebaut ist, und damit nicht nur der Schliesszylinder, sondern auch das Gehäuse der Kontrolleinrichtung, vor unbefugten Zugriffen geschützt werden muss. Die Kontrolleinrichtungen sind im weiteren zumeist im Inneren eines Gehäuses, d.h. an der Innenseite einer Trennwand angeordnet. Normalerweise sind diese Befestigungsstellen schlecht zugänglich, insbesondere bei Nutzfahrzeugen, wo diese Kontrolleinrichtungen beispielsweise im Bereiche der Türe oder der Trittbretter an der Innenseite der Karrosserie angeordnet werden. In diesen Bereichen lassen sich die bekannten Schutzbeschläge nur mit erheblichen Schwierigkeiten befestigen, und die Sicherheit gegen Auf- bzw. Abbrechen der Schutzeinrichtungen ist ungenügend.

Es ist Aufgabe der vorliegenden Erfindung, eine Kontrolleinrichtung mit aufbruchsicherer Befestigung und einem Schliesszylinder zu schaffen, bei welcher das Abdrehen des Schliesszylinders, das Ausziehen und auch das Aufbohren wirksam verhindert wird. Gleichzeitig soll auch derjenige Teil des Gehäuses der Kontrolleinrichtung, in welchem der Schliesszylinder eingebaut ist, vor Zugriffen geschützt sein und trotzdem in einfacher Weise an der Trennwand befestigbar sein.

Diese Aufgabe wird durch die im kennzeichnenden Teil des Patentanspruches 1 definierten Merkmale gelöst. Vorteilhafte Weiterbildungen der Erfindung ergeben sich nach den Merkmalen der abhängigen Patentansprüche.

Bei der vorgeschlagenen Lösung ist der Schliesszylinder vollständig von einem vorderen Gehäuseteil der Kontrolleinrichtung umschlossen. Dies bringt den Vorteil, dass der Schliesszylinder in ein Element eingebaut ist, welches einen grösseren Durchmesser aufweist und damit auch einen grösseren Widerstand gegen Aufbrechen und Zerstörung hat. Im weiteren ist es möglich, den vorderen Gehäuseteil der Kontrolleinrichtung direkt mit den Schutzelementen zu verbinden und dadurch die Anzahl der Elemente, auf welche zerstörerisch eingewirkt werden kann, zu reduzieren. Dies erhöht die Sicherheit ganz erheblich, da die Verbindungen stärker ausgebildet werden können, und die Befestigung der Schutzelemente nicht an einzelnen Punkten der Trennwand erfolgt. Gemäss der Erfindung wird der Bereich der Trennwand, welcher sich um die Durchstecköffnung des Zylinderschlosses, bzw. des vorderen Gehäuseteiles der Kontrolleinrichtung befindet, grossflächig zwischen den Schutzelementen eingespannt und dadurch eine grossflächige integrale Verbindung zwischen den Schutzelementen und der Trennwand gebildet. Diese Verbindung lässt sich bei unbefugten Zugriffsversuchen nur noch durch grossflächige Zerstörung der Trennwand lösen, wobei im Normalfall auch die Kontrolleinrichtung zerstört wird, und damit die zur Kontrolleinrichtung gehörenden Steuerorgane nicht mehr in Betrieb gesetzt werden können. Die aufbruchsichere Befestigung ist einfach aufgebaut und weist den weiteren Vorteil auf, dass sie einfach montiert werden kann. Die Montageschritte, welche von der Innenseite der Trennwand ausgeführt werden müssen, sind ohne Schwierigkeiten durchführbar. Die erfindungsgemässe aufbruchsichere Befestigung schützt das Zylinderschloss, bzw. die Kontrolleinrichtung in wirksamer Weise gegen Aufbohren, Ausziehen des Schlosszylinders, bzw. des Rotors und auch gegen Abdrehen, bzw. Abwürgen durch das Aufbringen von tangential wirkenden Kräften. Das Aufbringen von tangential wirkenden Kräften wird durch die Formgebung der aussen liegenden Panzerrosette verhindert, und die entsprechenden Kräfte werden in eine unwirksame Richtung abgelenkt. Würde es wider Erwarten gelingen, die Panzerrosette um die Achse des Schliesszylinders zu drehen, so würde die Kontrolleinrichtung mitverdreht und damit die hydraulischen, pneumatischen oder elektrischen Anschlussleitungen abgewürgt. Der Aufbruchversuch hätte damit wiederum zur Folge, dass die Steuerleitungen zerstört, und damit eine Betätigung der Steuereinrichtungen nicht mehr möglich ist. Das Aufbohren des Schliesszylinders mit grossen Bohrern wird durch den drehbaren und aus hartem Material bestehenden Panzerrotor verunmöglicht. Das teilweise An- oder Aufbohren von Teilen des Schliesszylinders mit Bohrern mit kleinem Durchmesser wird durch die zusätzliche, vor dem Rotor angeordnete harte Abdeckscheibe verhindert, da diese nur den Bereich des Schlüsselkanales freilässt. Die drehbaren Schutzteile, nämlich der Panzerrotor und die zusätzliche Abdeckscheibe, sind als geschlossene Kreisringe ausgebildet. Sie weisen nur einen zentralen Durchbruch in der Form des Schlüsselquerschnittes auf. Im Gegensatz zu den bekannten Lösungen, bei welchen die drehbaren Scheiben aufgeschnittene Teilringe sind, weisen die geschlossenen Ringe einen wesentlich höheren Widerstand gegen Zerstörung auf. Die nach aussen gerichteten Schutzelemente wie die Panzerrosette, der Panzerrotor und die zusätzliche Abdeckscheibe, sind gehärtet. Vorteilhaft sind einsatzgehärtete Teile, welche zähhart sind. Solche Teile widerstehen auch Schlägen mit schweren Werkzeugen und zersplittern bei Ueberbelastung nicht in Einzelteile. Die Rockwellhärte dieser Teile beträgt mindestens 55 HRC, bevorzugt 63 - 65 HRC.

Die nach aussen, beziehungsweise gegen die Bedienungsseite gerichteten Schutzelemente sind vorteilhaft so ausgebildet, dass der Rotor des Zylinderschlosses nur mit einem Schlüssel mit einem verlängerten Schlüsselbart betätigt werden kann. Als Folge dieser Ausgestaltung müssen Aufbruchwerkzeuge, in der Form von flachen Klingen, welche in den Schlüsselkanal eingesteckt werden, ebenfalls länger sein. Dies hat zur Folge, dass derartige Aufbruchklingen abbrechen, bevor das notwendige Drehmoment zur Zerstörung des Schlosses aufgebracht werden kann. Dabei kann die Dicke der Zusatzelemente, welche die Panzerung bilden, und die Verlängerung des Schlüsselbartes an die Bedürfnisse angepasst werden.

Die Schutzelemente und das Gehäuse, in welchem die Kontrolleinrichtung befestigt ist, verhindern unbefugte Zugriffe auf den Schliesszylinder und die drehbaren Ventilelemente der Kontrolleinrichtung. Der Schliesszylinder ist somit innerhalb der Befestigung allseitig gegen Fremdeinwirkungen geschützt. Insbesondere bei Nutzfahrzeugen wird durch die erfindungsgemässe aufbruchsichere Befestigung der Kontrolleinrichtung ein unbefugtes Fahren mit diesen Fahrzeugen, bzw. ein Diebstahl wirksam verhindert.

Im folgenden wird die Erfindung anhand von Ausführungsbeispielen, unter Bezugnahme auf die beiliegenden Zeichnungen, näher erläutert. Es zeigen:
- Fig. 1: einen Längsschnitt durch eine erfindungsgemässe Befestigung und den Gehäuseteil mit dem Schliesszylinder, und
- Fig. 2: eine Frontansicht der Befestigung von aussen, bzw. der Bedienungsseite.

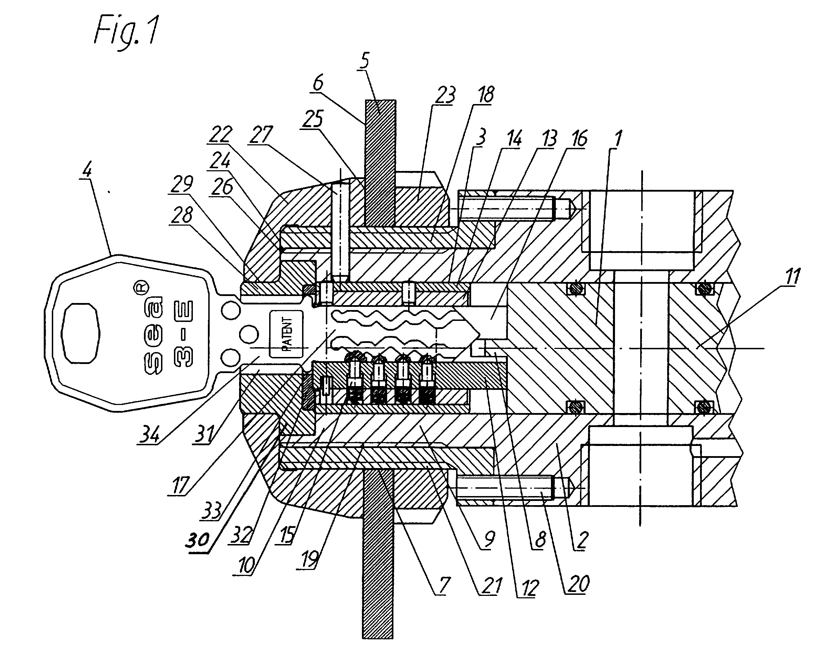

Fig. 1 zeigt einen Ausschnitt aus einem Aussenblech einer Karrosserie an einem Kraftfahrzeug, bzw. aus einer Trennwand 5. Diese Trennwand 5 weist eine zugängliche Aussenfläche 6, beziehungsweise bedienungsseitige Oberfläche und einen Durchbruch 7 in der Form einer runden Bohrung auf. Innerhalb der Trennwand 5, d.h. im Innenbereiche der Karrosserie, ist eine Kontrolleinrichtung 1 mit einem Gehäuse 2 angeordnet. In Fig. 1 sind nur die gegen die Trennwand 5 gerichteten und für die Befestigung relevanten Teilbereiche der Kontrolleinrichtung 1 und des Gehäuses 2 dargestellt. Die Ausgestaltung und Funktion der Kontrolleinrichtung 1 kann beispielsweise gemäss EP-B1-0 239 987 ausgeführt sein. Die Kontrolleinrichtung 1 umfasst dabei nur teilweise dargestellte hydraulische Steuer- und Kontrollelemente, welche über einen drehbaren Zanfen 8 betätigt werden können. Drehen des Zapfens 8, bzw. Betätigen der Kontrolleinrichtung 1, lassen sich beispielsweise die hydraulischen Kreisläufe der Steuerung oder der Bremssysteme unterbrechen oder umleiten, sodass sie gesperrt oder nicht einsatzfähig sind. In einem vorderen Teil 9 des Gehäuses 2 ist in einer Bohrung ein Schliesszylinder 3 eingebaut und auf die Drehachse 11 ausgerichtet. Der Schliesszylinder 3 umfasst unter anderem einen Rotor 12, einen Stator 13 und eine Hülse 14, sowie Kantenzuhaltungen 15 und nicht dargestellte seitliche Zuhaltungen. Das im dargestellten Beispiel eingebaute Zylinderschloss ist an sich bekannt und entspricht im wesentlichen einem Schliesszylinder gemäss US-A-3,264,852. Es können aber auch andere bekannte Schliesszylinder eingesetzt sein. Der Rotor 12 ist mit einem Schlüsselkanal 16 ausgestattet, in welchem der Schlüsselbart 17 eines Schlüssels 4 einführbar ist. Mit Hilfe des in den Schlüsselkanal 16 eingeführten Schlüssels 4 wird der Rotor gedreht und damit der drehbare Zapfen 8 der Kontrolleinrichtung 1 betätigt. Der Rotor 12 ist in bekannter Weise innerhalb des Stators 13 nur dann drehbar, wenn der Schlüsselbart 17 richtig codiert ist, und die Kantenzuhaltungen 15, sowie die nicht dargestellten Seitenzuhaltungen, in der Oeffnungsposition positioniert sind. Die Hülse 14 und der Stator 13 des Schliesszylinders 3 sind im vorderen Teil 9 des Gehäuses 2 mittels nicht dargestellter Stifte oder Schrauben befestigt und gegen Verdrehen gesichert.

Der vordere Teil 9 des Gehäuses 2 weist einen Kopfteil 10 auf, welcher durch den Durchbruch 7 in der Trennwand 5 gesteckt ist. Das Gehäuse 2 besteht normalerweise aus Aluminium oder einem anderen Leichtmetall, welches keine genügende Festigkeit gegen direkte Krafteinwirkungen aufweist. Auf den vorderen Teil 9 des Gehäuses 2 ist deshalb eine Gewindebüchse 18 aufgesetzt, welche im dargestellten Beispiel einerseits über eine Innenverschraubung 19 und andererseits über zusätzliche axialgerichtete Schrauben 20 mit dem Gehäuse 2 verbunden ist. Die Gewindebüchse 18 weist ein Aussengewinde 21 auf, welches sich über den vorderen Teil 9 des Gehäuses 2, und damit durch den Durchbruch 7 in der Trennwand 5 erstreckt. Auf dieses Aussengewinde 21 ist zwischen der Trennwand 5 und dem Gehäuse 2, bzw. der Kontrolleinrichtung 1 eine Spannmutter 23 aufgesetzt, und an dem Teilbereich, welcher durch die Trennwand 5 nach aussen ragt, eine Panzerrosette 22 angeordnet. Diese Panzerrosette 22 besteht aus einsatzgehärtetem Stahl mit einer Rockwellhärte von mindestens 55 HRC, im Normalfalle mit einer Härte von 60 - 65 HRC. Die Panzerrosette 22 ist auf das Aussengewinde 21 der Gewindebüchse 18 aufgeschraubt und liegt mit einer inneren Anschlagfläche 24 an der Stirnfläche 26 des Kopfteiles 10 des vorderen Gehäuseteiles 9 an. Eine zweite Auflagefläche 25 der Panzerrosette 22 liegt an der Aussenfläche 6, beziehungsweise an der bedienungsseitigen Oberfläche der Trennwand 5 an, womit eine grossflächige Verbindung zur Trennwand 5 gebildet wird. Die Trennwand 5 ist zwischen der Auflagefläche 25 der Panzerrosette 22 und der Spannmutter 23 eingespannt. Die Sicherung der Gewindeverbindungen zwischen dem Aussengewinde 21 am vorderen Gehäuseteil 9, und den Innengewinden an der Panzerrosette 22 und der Spannmutter 23, erfolgt durch Einbringen eines Klebstoffes vor dem endgültigen Zusammenbau und dem Einspannen der Trennwand 5. Als Kleber kann beispielsweise ein an sich bekannter Zweikomponentenkleber verwendet werden. Bei genügender Zugänglichkeit der Panzerrosette 22, bzw. der Spannmutter 23 kann anstelle, oder zusätzlich zur Klebverbindung, eine Stiftsicherung angeordnet werden. Dabei werden in radialer Richtung Sicherungsstifte 27 eingesetzt, welche ebenfalls nicht mehr lösbar sind.

Im Zentrum der Panzerrosette 22 ist eine Zylinderbohrung 29 angeordnet, in welcher ein Panzerrotor 28 drehbar gelagert ist. Dieser Panzerrotor 28 weist einen Flanschteil 30 auf, dessen Durchmesser grösser ist, als derjenige der Bohrung 29. Das Flanschteil 30 ist im Kopfteil 10 drehbar gelagert und ist zwischen dem Kopfteil 10 und der Panzerrosette 22 geführt. Im Panzerrotor 28 ist ein rechteckiger Durchlass 31 angeordnet, durch welchen der Schlüsselbart 17 durchgesteckt werden kann. Der rechteckige Kanal 31 ist allseitig geschlossen, bzw. vom Panzerrotor 28 ringförmig umschlossen. Der Panzerrotor 28 kann deshalb nicht radial aufgesprengt werden. An dem gegen das Zylinderschloss gerichteten hinteren Ende des Panzerrotors 28 ist eine zusätzliche Abdeckscheibe 32 aus hartem Material eingebaut, welche ebenfalls einen rechteckigen Kanal 33 als Durchlass für den Schlüsselbart 17 aufweist. Auch dieser Kanal 33 ist ringförmig von der Abdeckscheibe 32 umschlossen, und die Abdeckscheibe 32 ist radial nicht aufsprengbar. Die Abdeckscheibe 32 ist einsatzgehärtet mit einer Rockwellhärte von 60 - 65 HRC. Diese zusätzliche Abdeckscheibe 32 ist mit Hilfe von nicht dargestellten Stiften mit dem Rotor 12 des Schliesszylinders 3 verbunden und deshalb nur gemeinsam mit dem Rotor 12 drehbar. Die Panzerrosette 22 kann somit gegenüber der zusätzlichen Abdeckscheibe 32, bzw. dem Rotor 12 verdreht werden. Der Schlüssel 4 weist am hinteren Ende des Schlüsselbartes 17 eine Verlängerung 34 auf, wodurch die gepanzerten Schutzelemente überbrückt werden, und ein vollständiges Einstecken des Schlüsselbartes 17 in den Schliesszylinder 3 ermöglicht wird.

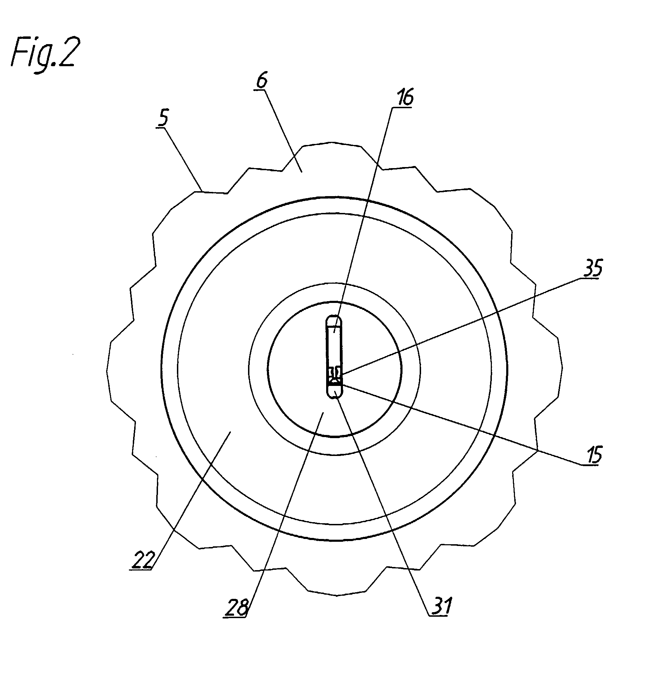

In Fig. 2 ist die aufbruchsichere Befestigung in einer Frontalansicht, d.h. einer Aufsicht auf die Aussenfläche 6 der Trennwand 5 dargestellt. Dabei ist ersichtlich, dass die Panzerrosette 22, gemeinsam mit dem Panzerrotor 28, den vorderen Teil 9 des Gehäuses 2, und damit den Schliesszylinder 3 vollständig abdecken. Es besteht keine mechanische Angriffsmöglichkeit, und die Panzerrosette 22 weist glatte und abweisende Flächen auf. Da die von aussen zugänglichen Elemente alle aus gehärtetem Material bestehen, können keine Abdreh- oder Bohrwerkzeuge zum Angriff gebracht werden. Einzig im Zentrum der Befestigung befindet sich ein Durchlass in der Form des rechteckigen Kanales 31 im Panzerrotor 28, welcher seine Fortsetzung im Schlüsselkanal 16 im Rotor 12 findet. Innerhalb des Schlüsselkanales 16 sind die Enden der Kantenzuhaltungen 15 sichtbar, sowie Mitnehmer 35, welche Teile der in Fig. 1 nicht dargestellten Seitenzuhaltungen sind. Diese Mitnehmer 35 wirken mit den codierten Führungsnuten im Schlüsselbart 17 zusammen. Wie bereits zu Fig. 1 beschrieben, ist der Panzerrotor 28 gegenüber der Panzerrosette 22 drehbar, und zwar unabhängig vom Rotor 12 des Schliesszylinders 3. Ein Aufbohren in Richtung der Zentralachse oder Drehachse 11 und im Bereiche des rechteckigen Durchlasses 31 ist deshalb nicht möglich, da sich der Panzerrotor 28 mit dem Bohrer drehen würde. Dies auch dann, wenn ein Bohrer eingesetzt würde, welcher geeignet wäre, Materialien von einer Rockwellhärte von z.B. 60 HRC zu durchbohren. Aber auch das Anbohren von Teilen des Schliesszylinders 3 mit einem Bohrer, welcher einen kleineren Durchmesser aufweist, als die Breite des rechteckigen Kanales 31, ist nicht möglich, da hinter dem Panzerrotor 28 zusätzlich die Abdeckscheibe 32 angeordnet ist, welche ebenfalls eine Rockwellhärte von z.B. 60 HRC aufweist. Diese zusätzliche Abdeckscheibe 32 ist, wie zu Fig. 1 beschrieben, mit dem Rotor 12 verbunden und kann nur mit diesem gemeinsam gedreht werden. Der Durchmesser der zusätzlichen Abdeckscheibe 32 ist so gross, dass alle kritischen Bereiche des Schliesszylinders 3 in Richtung der Drehachse 11 abgedeckt sind. Wird der Panzerrotor 28 unabhängig vom Rotor 12 des Schliesszylinders 3 gedreht, so bleibt nur im Zentrum des rechteckigen Durchlasses 31 ein kleiner Durchgang in den Schlüsselkanal 16 frei. Die übrigen Bereiche werden von hinten durch die zusätzliche Abdeckscheibe 32 abgedeckt, sodass auch ein Aufbzw. Anbohren mit kleinen Bohrern wirksam unterbunden wird.

Die erfindungsgemässe aufbruchsichere Befestigung für die Kontrolleinrichtung 1 an der Trennwand 5 kann nur durch Zerstörung aufgebrochen werden und schützt den Schliesszylinder 3 im Gehäuse 2 der Kontrolleinrichtung 1 vor unbefugtem Zugriff. Da der Schliesszylinder 3 direkt nicht zugänglich ist, könnte nur versucht werden, die Panzerrosette 22 abzudrehen, was jedoch sehr grosse Kräfte erfordern würde. Diese grossen Kräfte würden zu einer Zerstörung des vorderen Gehäuseteiles 9 führen, wodurch der Schliesszylinder 3, und damit die Kontrolleinrichtung 1, nicht mehr betätigt werden könnten. Damit bleibt auch bei einem Aufbruchversuch mit sehr grosser Krafteinwirkung die Schutzwirkung der aufbruchsicheren Befestigung erhalten, und die Sperrwirkung der Kontrolleinrichtung 1 bleibt ebenfalls erhalten. Trotzdem lässt sich die aufbruchsichere Befestigung der Kontrolleinrichtung an der Trennwand 5 in einfacher Weise anbringen. An der Trennwand 5, welche beispielsweise eine Gehäusewand im Bereiche der Fahrerkabine eines Nutzfahrzeuges sein kann, muss nur der Durchbruch 7 angebracht werden, und es sind keine zusätzlichen Verstärkungen oder Befestigungspunkte notwendig. Im weiteren sind alle ausserhalb der Aussenfläche 6 liegenden und von aussen zugänglichen Teile aus hartem Material hergestellt, welche dem Angriff von Werkzeugen einen hohen Widerstand entgegensetzen. Am Schliesszylinder 3 selbst sind keine zusätzlichen Massnahmen notwendig, um die Aufbohr- und Abbruchsicherheit zu erhöhen.

## Patentansprüche

1. Kontrolleinrichtung (1) mit aufbruchsicherer Befestigung, einem Schliesszylinder (3) und einem Schlüssel (4), wobei die Kontrolleinrichtung (1) an einer Innenseite einer Trennwand (5) angeordnet und der Schliesszylinder (3) in das Gehäuse (2) der Kontrolleinrichtung (1) eingebaut ist, ein Teilbereich des Schliesszylinders (3) in einen Durchbruch (7) in der Trennwand (5) eingreift und die Oeffnung des Schlüsselkanales (16) gegen die Aussenseite, beziehungsweise die Bedienungsseite gerichtet, und der nach aussen gerichtete Teil des Schliesszylinders (3) mindestens teilweise von Schutzelementen geschützt ist, dadurch gekennzeichnet, dass der Schliesszylinder (3) über die ganze Länge von einem vorderen Gehäuseteil (9) der Kontrolleinrichtung (1) umschlossen ist, dieser vordere Gehäuseteil (9) der Kontrolleinrichtung (1) einen Teilbereich mit einem Aussengewinde (21) aufweist, das Kopfteil (10) dieses vorderen Gehäuseteiles (9) durch den Durchbruch (7) in der Trennwand (5) gesteckt ist, dieses Kopfteil (10) von einer Panzerrosette (22) abgedeckt, und diese Panzerrosette (22) auf das vordere Gehäuseteil (9) aufgeschraubt ist, die Panzerrosette (22) mit einer ersten Anschlagfläche (24) an einer Stirnfläche (26) des Kopfteiles (10) und mit einer zweiten Auflagefläche (25) an der bedienungsseitigen Oberfläche (6) der Trennwand (5) anliegt, zwischen der Panzerrosette (22) und der Stirnseite des Schliesszylinders (3) ein Panzerrotor (28) drehbar gelagert ist, wobei in diesem Panzerrotor (28) ein Durchlass (31) für den Schlüssel (4) angeordnet ist, und an der Innenseite der Trennwand (5) eine Spannmutter (23) auf das Aussengewinde (21) des vorderen Gehäuseteiles (9) aufgesetzt, und die Trennwand (5) zwischen dieser Spannmutter (23) und der zweiten Auflagefläche (25) der Panzerrosette (22) eingespannt ist.

2. Kontrolleinrichtung nach Patentanspruch 1, dadurch gekennzeichnet, dass die Panzerrosette (22) und das vordere Gehäuseteil (9) der Kontrolleinrichtung (1) mittels einer Klebeverbindung fest miteinander verbunden sind.

3. Kontrolleinrichtung nach Patentanspruch 1 oder 2, dadurch gekennzeichnet, dass das vordere Gehäuseteil (9) mit dem Kopfteil (10) eine aufgesetzte Gewindebüchse (18) aufweist, welche kraft- und/oder formschlüssig fest mit dem Gehäuseteil (9) verbunden ist, und die Panzerrosette (22) auf diese Gewindebüchse (18) aufgeschraubt ist.

4. Kontrolleinrichtung nach einem der Patentansprüche 1 bis 3, dadurch gekennzeichnet, dass die Panzerrosette (22) und der Panzerrotor (28) aus einem Material mit einer Rockwellhärte von mindestens 55 HRC bestehen.

5. Kontrolleinrichtung nach einem der Patentansprüche 1 bis 4, dadurch gekennzeichnet, dass zwischen dem Panzerrotor (28) und dem vorderen Ende des Zylinderschlosses (3) eine zusätzliche Abdeckscheibe (32) aus einem Material mit einer Rockwellhärte von mindestens 55 HRC, mit einem Durchlass (33) für den Schlüssel (4) angeordnet, und diese Abdeckscheibe (32) mit dem Rotor (12) des Schliesszylinders (3) verbunden und gemeinsam mit dem Rotor (12) drehbar ist.

6. Kontrolleinrichtung nach einem der Patentansprüche 1 bis 5, dadurch gekennzeichnet, dass der Schlüsselbart (17) des Schlüssels (4) am hinteren Ende eine Verlängerung (34) aufweist.

## Claims

1. A control device (1) with anti-theft securing, a cylinder lock (3) and a key (4), the control device (1) being arranged on an inside of a partition (5) and the cylinder lock (3) being fitted into the housing (2) of the control device (1), a partial region of the cylinder lock (3) engaging in an aperture (7) in the partition (5) and the opening of the key duct (16) facing the outside, or the operating side, and the outwardly facing section of the cylinder lock (3) being at least partially protected by protective elements, characterised in that the cylinder lock (3) is enclosed over its entire length by a front housing section (9) of the control device (1), this front housing section (9) of the control device (1) comprises a partial region with an external thread (21), the head section (10) of said front housing section (9) is fitted through the aperture (7) in the partition (5), said head section (10) is covered by an armoured collar (22), and said armoured collar (22) is screwed onto the front housing section (9), the armoured collar (22) rests with a first abutment surface (24) against an end face (26) of the head section (10) and with a second bearing surface (25) against the surface (6) on the operating side of the partition (5), an armoured rotor (28) is rotatably mounted between the armoured collar (22) and the end face of the cylinder lock (3), a passage (31) for the key (4) being arranged in said armoured rotor (28), and a clamping nut (23) being fitted onto the external thread (21) of the front housing section (9) on the inside of the partition (5), and the partition (5) being clamped between said clamping nut (23) and the second bearing surface (25).

2. A control device according to claim 1, characterised in that the armoured collar (22) and the front housing section (9) of the control device (1) are fixedly connected with one another by means of an adhesive connection.

3. A control device according to claim 1 or 2, characterised in that the front housing section (9) with the head section (10) comprises a fitted threaded bush (18), which is non-positively and/or positively fixedly connected to the housing section (9), and the armoured collar (22) is screwed onto said threaded bush (18).

4. A control device according to one of claims 1 to 3, characterised in that the armoured collar (22) and the armoured rotor (28) are made of a material with a Rockwell hardness of at least 55 HRC.

5. A control device according to one of claims 1 to 4, characterised in that an additional cover disk (32) made of a material having a Rockwell hardness of at least 55 HRC and comprising a passage (33) for the key (4) is arranged between the armoured rotor (28) and the front end of the cylinder lock (3), said cover disk (32) being connected to the rotor (12) of the cylinder lock (3) and being rotatable together with the rotor (12).

6. A control device according to one of claims 1 to 5, characterised in that the key bit (17) of the key (4) comprises an extension (34) at the rear end.

## Revendications

1. Dispositif de contrôle (1) comportant une fixation anti-effraction, un cylindre de serrure (3) et une clé (4), le dispositif de contrôle (1) étant agencé sur une face intérieure d'une paroi de séparation (5) et le cylindre de serrure (3) étant monté dans le boîtier (2) du dispositif de contrôle (1), une zone partielle du cylindre de serrure (3) s'engageant dans une traversée (7) dans la paroi de séparation (5), et l'ouverture du canal à clé (16) étant orientée vers la face extérieure ou face de manipulation, et la partie du cylindre de serrure (3) tournée vers l'extérieur étant protégée au moins en partie par des éléments de protection, caractérisé en ce que le cylindre de serrure (3) est entouré sur toute la longueur par une partie de boîtier avant (9) du dispositif de contrôle (1), en ce que cette partie de boîtier avant (9) du dispositif de contrôle (1) comporte une zone partielle avec un filetage (21), en ce que la portion de tête (10) de cette partie de boîtier avant (9) est enfilée à travers la traversée (7) dans la paroi de séparation (5), et ce que cette portion de tête (10) est recouverte par un écusson de blindage (22), en ce que cet écusson de blindage (22) est vissé sur la partie de boîtier avant (9), l'écusson de blindage (22) s'appuie par une première surface de butée (24) contre une surface frontale (26) de la portion de tête (10) et par une seconde surface de butée (25) contre la surface côté manipulation (6) de la paroi de séparation (5), en ce qu'un rotor de blindage (28) est monté en rotation entre l'écusson de blindage (22) et la face frontale du cylindre de serrure (3), dans ce rotor de blindage (28) étant prévu un passage (31) pour la clé (4) et un écrou de serrage (23) étant posé, du côté intérieur de la paroi de séparation (5), sur le filage (21) de la partie de boîtier avant (9), et en ce que la paroi de séparation (5) est serrée entre cet écrou de serrage (23) et la seconde surface d'appui (25) de l'écusson de blindage (22).

2. Dispositif de contrôle selon la revendication 1, caractérisé en ce que l'écusson de blindage (22) et la partie de boîtier avant (9) du dispositif de contrôle (1) sont solidaires l'un de l'autre au moyen d'une liaison collée.

3. Dispositif de contrôle selon l'une ou l'autre des revendications 1 et 2, caractérisé en ce que la partie de boîtier avant (9) avec la portion de tête (10) comprend une douille à pas de vis rattachée (18) qui est fermement reliée par coopération de forces et/ou de formes à la partie de boîtier (9), et en ce que l'écusson de blindage (22) est vissé sur cette douille à pas de vis (18).

4. Dispositif de contrôle selon l'une quelconque des revendications 1 à 3, caractérisé en ce que l'écusson de blindage (22) et le rotor de blindage (28) sont constitués en un matériau présentant une dureté Rockwell d'au moins 55 HRC.

5. Dispositif de contrôle selon l'une quelconque des revendications 1 à 4, caractérisé en ce qu'il est prévu, entre le rotor de blindage (28) et l'extrémité avant de la serrure à cylindre (3), un disque de couverture additionnel (32) en un matériau d'une dureté Rockwell d'au moins 55 HRC, présentant un passage (33) pour la clé (4), et en ce que ce disque de couverture (32) est relié au rotor (12) du cylindre de serrure (3) et en rotation conjointement avec le rotor (12).

6. Dispositif de contrôle selon l'une quelconque des revendications 1 à 5, caractérisé en ce que le panneton (17) de la clé (4) comprend un prolongement (34) à l'extrémité arrière.
